(19) **Europäisches Patentamt**
**European Patent Office**
**Office européen des brevets**

(11) **EP 4 054 057 A1**

(12) **EUROPEAN PATENT APPLICATION**

(43) Date of publication:
**07.09.2022 Bulletin 2022/36**

(21) Application number: **21160779.1**

(22) Date of filing: **04.03.2021**

(51) International Patent Classification (IPC):
***H02J 50/12*** *(2016.01)*   ***H02J 50/60*** *(2016.01)*
***G01K 7/22*** *(2006.01)*

(52) Cooperative Patent Classification (CPC):
**H02J 50/12; G01K 7/22; H01F 38/14;**
**H04B 5/0037; H04B 5/0081;** G01K 2217/00;
H01F 27/402; H01F 2027/406; H02J 50/60

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **ElectDis AB**
**211 21 Malmö (SE)**

(72) Inventors:
• **Swaans, Laurens**
  **212 32 Malmö (SE)**
• **Andersson, Max**
  **211 76 Malmö (SE)**

(74) Representative: **Ström & Gulliksson AB**
**P.O. Box 4188**
**203 13 Malmö (SE)**

(54) **A COIL UNIT, AND ASSOCIATED METHODS**

(57)   A method of controlling and/or evaluating the temperature of a wireless power coil (105; 205; 305) in coil unit (100; 200; 300) is provided. The method comprises providing a coil unit (100; 200; 300) comprising a wireless power coil (105; 205; 305) comprising at least two strands (112, 114; 212, 214; 312, 314), wherein at least one strand (114; 214; 314) is used for heating and at least one strand (112; 212; 312) is used for wireless power transfer, and applying a DC-current to the least one strand (114; 214; 314) used for heating.

Fig. 6b

## Description

## Technical Field

The present invention generally relates to the field of wireless power transfer, and more specifically to a coil unit for controlling and/or evaluating the temperature of a wireless power coil arranged in said coil unit. The coil unit could be used for testing of wireless power transfer between a wireless power device and a testing device. The present invention also relates to a method of controlling and/or evaluating the temperature of a wireless power coil in the coil unit. The present invention further relates to a method of testing the performance of wireless power transfer from a wireless power transmitter device having at least one wireless power transmitter coil.

## Background

Wireless power transfer is expected to become increasingly popular, for instance for wireless battery charging of mobile devices such as, for instance, mobile terminals, tablet computers, laptop computers, cameras, audio players, rechargeable toothbrushes, wireless headsets, as well as various other consumer products and appliances.

The Wireless Power Consortium has developed a wireless power transfer standard known as Qi. Other known wireless power transfer approaches include Alliance for Wireless Power, and Power Matters Alliance.

The wireless power transfer standard known as Qi by the Wireless Power Consortium will be referred to, without limitation, throughout this document as the presently preferred wireless power transfer manner applicable to the present invention. However, the invention may generally be applied also to other wireless power transfer standards or approaches, including but not limited to the ones mentioned above. Additionally, the invention may be applied to all kinds of wire wound inductors where it is beneficial to know the temperature of a coil. Hence, the invention is not limited to wireless power transfer.

Operation of devices that comply with Qi relies on magnetic induction between planar coils. Two kinds of devices are involved, namely devices that provide wireless power (referred to as base stations or wireless power transmitter devices), and devices that consume wireless power (referred to as mobile devices). Power transfer takes place from a base station to a mobile device. For this purpose, a base station contains a subsystem (a power transmitter) that comprises a primary coil, whereas a mobile device contains a subsystem (a power receiver) that comprises a secondary coil. In operation, the primary coil and the secondary coil will constitute the two halves of a coreless resonant transformer. Typically, a base station has a flat surface, on top of which a user can place one or more mobile devices so as to enjoy wireless battery charging or operational power supply for the mobile device(s) placed on the base station.

During operation, many different factors affect the quality of the wireless charging. For example, heat can be generated by magnetic induction in metal parts of the power receiver that are exposed to the magnetic field generated by the wireless power transmitter device. If the mobile device and/or the base station are exposed to excessive thermal exposure, several undesired effects may arise, for example damaging vital components in the mobile device or a reduced performance. Moreover, the charging efficiency, and thus the charging period needed, may vary depending on the orientation of the power receiver on the base station.

Another factor that affects the quality of the wireless charging is when a foreign object is placed in between the mobile device and the base station. A foreign object is in this context seen as any object that is not part of either the wireless power transmitter or wireless power receiver device and could cause unexpected losses to wireless power transfer. The energy absorbed by the foreign object is likely to result in the (unintentional) heating of the foreign object. This can lead to severe safety concerns when the temperature exceeds human safety thresholds. On top of that, excessive temperatures can cause irreparable damage to either device in close proximity of the foreign object. Different foreign object detection functionalities exist, that interrupt the wireless power transfer, restrict it in some way or does not initiate power transfer at all when a foreign object is positioned in such a way that it could cause aforementioned undesired heating effects. A common technique to detect these Foreign Objects is through power loss accounting. In this methodology the power receiver reports the amount of power it takes from the transmitter and the transmitter itself calculates (often based on measurements) the amount of power it is transmitting. The difference between these two values is considered the amount of power going into Foreign Objects and therewith undesirable. These calculations need to take into account the internal losses in the power coil (due to the current flowing through the windings of each coil). The temperature coefficient of copper causes significant changes in the calculated losses. Any error in estimating these power values will force the system to shut down, to prevent the unwanted heating of potential objects, as the alternative would be to risk heating up Foreign Objects to unsafe temperatures.

There is thus a need to test and evaluate how temperature affects the power transfer an accurate and cost-effective way. A number of prior art solutions exists, all associated with their own drawbacks. For example, the temperature can be evaluated using a temperature-controlled chamber where the products are tested. This is an expensive and large solution that requires a long time for devices to acclimatize before testing can start. Moreover, this solution excludes situations where only part of the device is heated and other parts remain cool. Another prior art solution is to use heating elements to generate local heat on the devices. In wireless power transfer, the addition of heating elements would either introduce metallic materials that would interfere with the power transfer or require costly and complicated modifications to the test setup to bypass this, such as glass/ceramic heat spreaders or temperature controlled liquids being pumped around the charging surface. Yet another prior art solution is the use of the existing power transfer coils as heating element and adding a DC current on top of the AC current flowing through the power transfer coils. This creates a static magnetic field that will change the electromagnetic properties of the devices being tested. For example, ferrite materials used can saturate and become useless for the power transfer when exposed to a static magnetic field.

Moreover, there is a need for the product manufacturer to evaluate their product or components therein with relation to temperature. Prior art solutions use temperature sensors added to the coil, such solution is associated with several drawbacks as the sensor may interfere with the electromagnetic field as well as providing temperature readings of an isolated spot that is not representative for the entire coil. Multiple sensors could be placed at strategic locations to get a better representation of the entire coil area, with the corresponding additional cost and complexity.

There is thus a need to provide a more stable and reliable temperature control of the devices being tested. In addition, this method can be used to reduce the cost of measuring / evaluating the temperature of the inductor in its circuit in any circuit using inductors.

## Summary

It is an object of the invention to offer improvements in the technical field of wireless power transfer.

A coil unit for controlling and/or evaluating the temperature of a wireless power coil in said coil unit is provided. The coil unit comprises a wireless power coil comprising at least two strands, wherein at least one strand is used for heating and at least one strand is used for wireless power transfer, and wherein the at least one strand used for heating is configured to receive a DC-current.

The coil unit may be in operative communication with a processing means configured to provide a DC-current to the at least one strand used for heating.

The processing means may further be configured to provide an AC-current to the at least one strand used for wireless power transfer.

In one embodiment, the at least two strands are part of a litz wire.

In yet one embodiment, the at least two strands are arranged in a bifilar winding structure.

The coil unit may be arranged in a wireless power device. The wireless power device may be a wireless power transmitter device or a wireless power receiver device.

The coil unit may be in operative communication with means for monitoring the temperature of the coil unit.

The means for monitoring the temperature may comprise means for resistance measurements.

In a second aspect, a wireless power device is provided. The wireless power device comprises the coil unit according to the first aspect.

The wireless power device may be configured to test how a further wireless power device, having at least one wireless power coil, reacts to a temperature change in the wireless power coil of the coil unit.

In a third aspect, a method of controlling and/or evaluating the temperature of a wireless power coil in the coil unit is provided. The method comprises providing a coil unit comprising a wireless power coil comprising at least two strands, wherein at least one strand is used for heating and at least one strand is used for wireless power transfer, and applying a DC-current to the least one strand used for heating.

The method may further comprise monitoring a temperature change of the wireless power coil.

The method may further comprise adjusting the applied DC-current based on the monitored temperature change.

In a fourth aspect, a method of testing a wireless power device is provided. The method comprises providing a coil unit comprising a wireless power coil comprising at least two strands, wherein at least one strand is used for heating and at least one strand is used for wireless power transfer, and applying a DC-current to the least one strand used for heating.

The method may further comprise monitoring how the wireless power device being tested reacts to the temperature change caused by the DC-current.

## Brief Description of the Drawings

Objects, features and advantages of embodiments of the invention will appear from the following detailed description, reference being made to the accompanying drawings.

Fig. 1 is a schematic block diagram of a wireless power transmitter device for wireless power transfer to a wireless power receiver device.
Figs. 2a-b are schematic views of different parts of a coil unit according to one embodiment.
Figs. 3a-b are schematic views of a coil unit according to different embodiments.
Figs. 4a-b are schematic views of different systems comprising a coil unit according to Figs. 2a-b or Figs. 3a-b.
Figs. 5a-d are schematic views of different systems comprising a coil unit according to Figs. 2a-b or Figs. 3ab.
Figs. 6a-c are schematic block diagrams of methods according to different embodiments.
Figs. 7a-b a measurement data from setups using a coil unit according to one embodiment.

**Detailed Description**

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

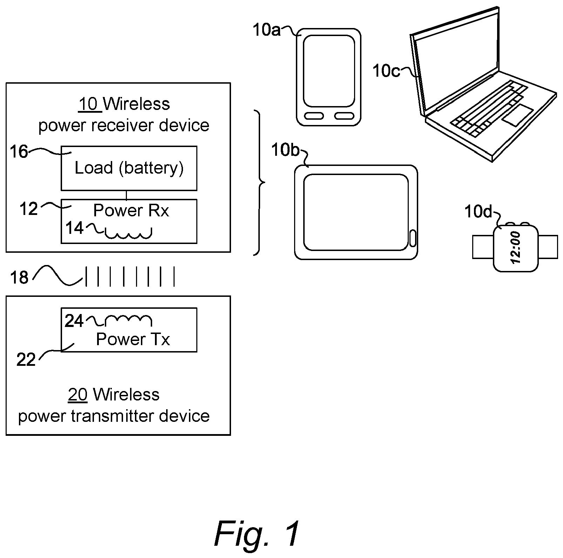

Fig. 1 illustrates a wireless power transmitter device 20 for wireless power transfer to a wireless power receiver device 10. The wireless power receiver device 10 may be a mobile device. The mobile device 10 may, for instance, be a mobile terminal (e.g. smartphone) 10a, tablet computer 10b (e.g. surfpad), laptop computer 10c, smart watch 10d, camera, audio player, rechargeable toothbrush, wireless headset, or another kind of consumer product or appliance.

The wireless power transfer will be described as being compliant with the Qi standard by the Wireless Power Consortium; hence, the wireless power transmitter device 20 is a base station in the Qi terminology. However, as already mentioned, the invention is generally applicable also to other wireless power transfer standards or approaches, including but not limited to the ones mentioned in the Background section.

The wireless power transmitter device 20 comprises a wireless power transmitter 22 having at least one wireless power transmitter coil 24. The transmitter device 20 may have a plurality of transmitter coils. The transmitter coils can be arranged in a spaced apart arrangement and/or in a partly overlapping manner.

The wireless power receiver device 10 comprises a wireless power receiver 12 having a wireless power receiver coil 14. In operation, the wireless power transmitter device 20 will transfer power wirelessly to the wireless power receiver device 10 by way of magnetic induction 18 via the wireless power transmitter coil 24 and wireless power receiver coil 14.

The power received by the wireless power receiver coil 14 will drive a load 16 in the wireless power receiver device 10. Typically, the load 16 may be a rechargeable battery, such as a lithium ion battery; hence, the wireless power transmitter device 20 will act as a wireless power charger for the wireless power receiver device 10. In another scenario, the load 16 may be electronic circuitry in the mobile device, wherein the wireless power transmitter device 20 will act as a wireless power supply for the wireless power receiver device 10.

As stated in the background section, an important aspect of wireless power transfer using electromagnetic fields is safety. A known downside of using electromagnetic fields is that these fields can cause heating of metallic objects that are exposed to the field. Devices that utilize the Qi specification have built in protection against such undesired heating of foreign objects, this protection is based on power and/or energy measurements on both sides of the electromagnetic field (transmitter and receiver side). Often they also directly measure or control the parameter of interest, namely temperature.

The temperature impacts the power transfer experience in two distinct ways; safety for the user/ operator of the equipment and charging performance of the devices. Obviously, an excessive temperature on any product surface poses a safety risk for users and should be avoided at all times. However, the temperature an end user is exposed to is the result of the ambient temperature (or operating temperature) and the additional heat added by the losses. This means that losses resulting in for example 30 degrees' increase would be harmless when the operating environment is below 30 degrees. On the other hand, if the operating environment would exceed 30 degrees, then an additional 30 degrees increase could pose a serious safety risk.

In addition to the safety risk, most electronic devices suffer from reduced performance when the operating temperature increases. Before posing any safety concern, this reduced performance will result in a poor user experience for the end user. Examples are reduced charging speed of a mobile phone or the accelerated aging of a device due to excessive temperature swings.

The present invention thus aims at providing a test equipment that allows testing of wireless power products under different operating temperatures to ensure safety and performance criteria are maintained at an acceptable level and/or providing a setup that improves product performance. The invention is aimed at providing an environment where the operating temperature of the devices can be controlled to approach extremes that can occur to end users but are difficult to test. For this, a coil unit 100; 200 is provided. However, as will be described more in detail later on, the coil unit 100; 200 could be used for other purposes than testing. In addition to controlling the operating temperature of the coil unit, the principle also works in reverse where the temperature of the coil unit can be measured by observing electrical characteristics of one of the strands. The present invention mainly has two application areas; creating a testing environment and improving product performance.

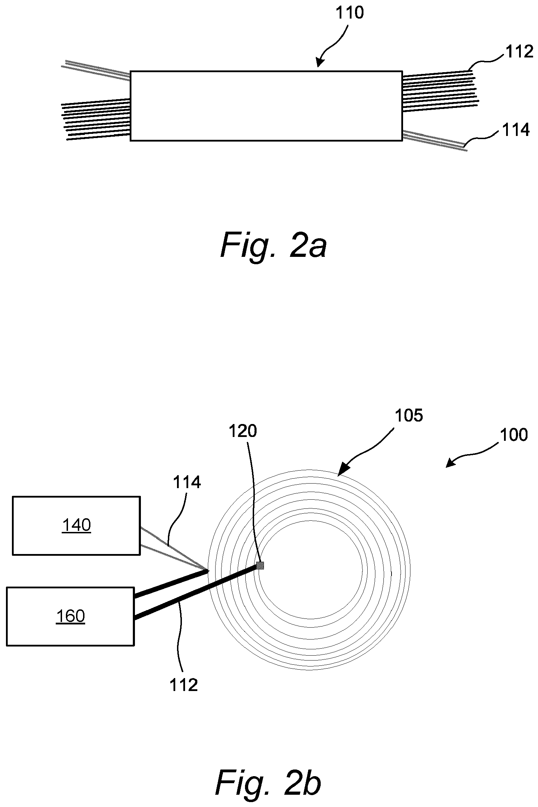

Figs. 2-3 illustrates two different embodiments of a coil unit 100; 200. In both embodiments, the coil unit 100; 200 comprises a wireless power coil 105; 205 comprising at least two sets of insulated strands 112, 114; 212, 214. At least one set of at least two strands 114; 214 is used for heating the wireless power coil 105; 205 and at least one set of at least one strand 112; 214 is used for wireless power transfer. The at least one set of strands 114; 214 used for heating is configured to receive a DC-current. The DC-current is routed back through the coil structure such that the resulting static magnetic field is minimized, but the heating effect remains.

Now turning to the embodiment shown in Figs. 2a-b. Fig. 2a illustrates a litz wire 110 comprising a plurality of individual strands 112, 114. The strands 112, 114 are typically of thin insulated wire arranged together. In one embodiment, the strands are twisted together in parallel. In one alternative embodiment, the strands are twisted together as a single bunch. In yet one embodiment, multiple bunches of strands are twisted together. The litz wire 110 forms the windings of a coil 105, as seen in Fig. 2b. Typically, the majority of the strands (112) of the litz wire 110 are used for power transfer, whereas a minority of the strands (114) are used for temperature measurement and/or temperature control.

Litz wire is used to reduce the skin effect. The skin effect is a term given to the phenomenon of when high frequency currents tend to flow near the surface (or skin) of an electrical conductor. This occurs due to magnetic fields being induced in the conductor by the changing currents. The magnetic fields make it difficult for the currents to flow anywhere but the outer surface. As the currents are being forced to flow in just part of the conducting wire, the effective resistance of the wire is greater. The higher the frequency, the more loss in the wire due to this increased effective resistance. The winding patterns of a litz wire equalize the proportion of the overall length over which each strand is at the outside of the conductor. This has the effect of distributing the current equally among the wire strands, reducing the resistance.

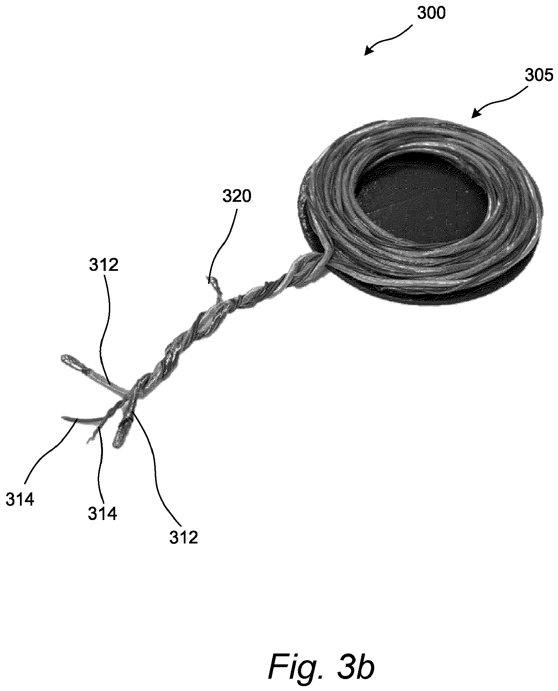

In one embodiment, all the strands of the litz wire are used for wireless power transfer and a plurality of individual strands (not part of the litz wires) are used for heating. This is shown in Fig. 3b.

In Fig. 2b, a coil unit 100 according to one embodiment is shown. The litz wire 100 is wounded to create a coil 105. The strands 114 that are used for temperature control are connected to a source of heating 140. The source of heating 140 could be a device 140 configured to apply a DC-current to the strands. The device could be a processing unit, a generator or the like. Alternatively, the source of heating could also be used to measure the electrical characteristics of the strands 114 without actually generating any significant heat.

The strands 112 that are used for wireless power transfer are connected to a source of wireless power 160. The source of wireless power could be a device 160 configured to generate power transfer. The device 160 could be a processing unit, generator or the like configured to provide an AC-current to the strands. The device 160 could also be a load suitable for power transfer. Hence, strands 112 that are used for wireless power transfer could either be connected to an AC-source or connected to a load, depending on what kind of device that is to be tested/evaluated. The devices 140 and 160 could be arranged in separate devices, or as a single device.

Hence, the applied DC-current can be controlled completely independent of the AC-current as different strands are used.

The strands 114 used for temperature control, i.e. heating and/or measurement, are short circuited 120. The key to not create disturbances in the magnetic field is to have the heating current travel back and forth the same loops and therewith minimize the area formed by the windings. This results in a very small static magnetic field that can be neglected, while at the same time the current still flows and causes the heating of the coil 105. Another benefit is that the heating of the strands in the coil is located where heating would be expected in normal use-cases that this setup is aiming to emulate.

In one embodiment, using litz wires, the number of strands are preferably in the range of 50 to 150 strands. However, as should be understood other number of strands are within the scope of the invention.

In the specific situation where the coil-heater is constructed from the litz wire itself at least three strands are needed. In this specific situation, two strands are used for the DC-current and one strand is used for the AC-current. The AC-current only needs one strand because it does not have to return the whole path of the coil, as previously been described.

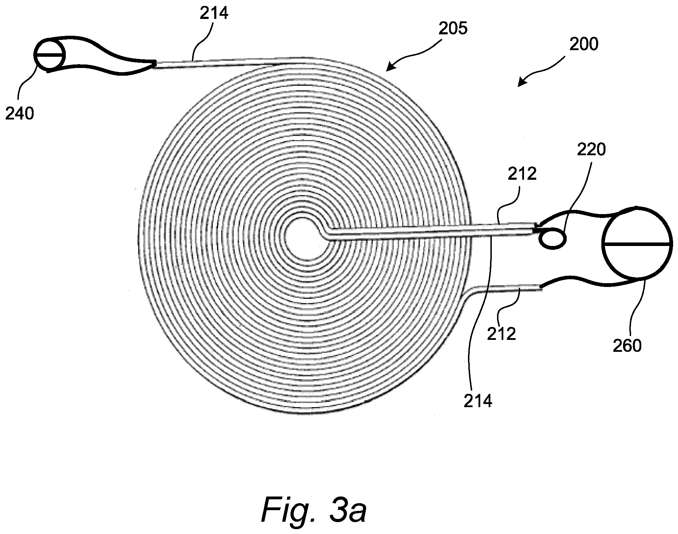

Fig. 3a shows an alternative embodiment of a coil unit 200. The coil unit 200 comprises at least two wires, each comprising at least two strands 212, 214. The at least two strands 212, 214 are arranged in a bifilar winding structure. The strands are wounded to create a coil 205.

The strands 214 that are used for temperature control are connected to a source of heating 240. The source of heating 240 could be a device 240 configured to apply a DC-current to the strands. The device could be a processing unit, a generator or the like.

The strands 212 that are used for wireless power transfer are connected to a source of wireless power 260. The source of wireless power could be a device 260 configured to generate power transfer. The device 260 could be a processing unit, generator or the like configured to provide an AC-current to the strands. The device 260 could also be a load suitable for power transfer. Hence, strands 212 that are used for wireless power transfer could either be connected to an AC-source or connected to a load, depending on what kind of device that is to be tested/evaluated.

The at least one strand 214 used for heating the wireless power coil 205 is short circuited 220. Hence, it is not connected to the source of wireless power 260. Instead, the at least one strand 214 used for heating is connected to source of heating 240 that is configured to provide a DC-current.

Fig. 3b shows yet another embodiment of a coil unit 300. The coil unit 300 comprises litz wire wounded to create a coil 305. All the strands of the litz wire are used for wireless power transfer and a plurality of individual strands (not part of the litz wires) are used for heating. In Fig. 3b, the litz wire 312 is used for power transfer, and the two individual strands 314 are used for heating.

The strands 314 that are used for temperature control are connected to a source of heating (not shown). The source of heating could be a device configured to apply a DC-current to the strands 314. The strands 314 used for temperature control, i.e. heating, are short circuited 320. The strands 312 that are used for wireless power transfer are connected to a source of wireless power (not shown).

Although not shown, the embodiments of Fig. 2 and Fig. 3 could be combined. For example, the coil unit could comprise of litz wires that are in a bifilar winding structure.

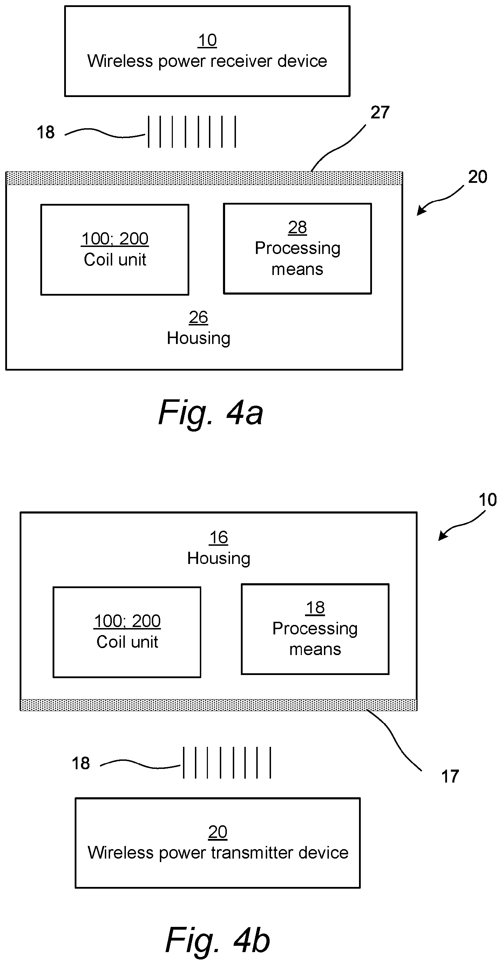

The coil unit 100; 200 described herein can be used for several use cases, as is shown in Figs. 4-5. The coil unit could be used for controlling the temperature of the coil unit 100; 200 or a wireless power coil 105; 205 arranged in said coil unit 100; 200, for evaluating said temperature and/or for measuring said temperature.

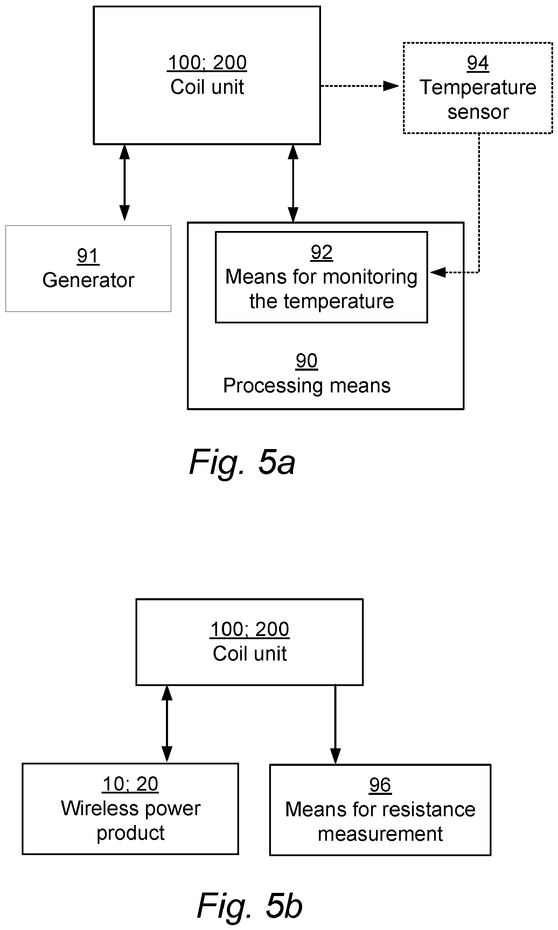

The coil 100; 200 can be used for generating excessive heat to emulate failure modes of wireless power devices, such as wireless chargers and/or receivers. For example, one may use the heated coil in a power transmitter product to see how receiver devices respond to the excessive temperature from the transmitter product or one may use the heated coil in a power receiver product to see how transmitter devices respond to the excessive temperature from the receiver product. This is shown in Fig. 4a and Fig. 4b, respectively. Additionally, or alternatively, the coil 100; 200 can be used to control the operating temperature of the coil itself. This is shown in Fig. 5a. Additionally or alternatively, a resistance measurement of the coil 105; 205 can be used to use estimate the temperature of the coil unit 100; 200. The resistance measurement is made on the strand 114, in this way the temperature can be estimated for the strand 114 and thus also the estimation of temperature of the strand 112.

Fig. 4a shows a system comprising a wireless power transmitter device 20 configured to test a wireless power receiver device 10 being the device under test. The wireless power transmitter device 20 comprises a coil unit 100; 200 and a processing means 28. The wireless power transmitter device 20 preferably also comprises a housing 26 enclosing the coil unit 100; 200 and the processing means 28. Hence, in this embodiment the coil unit 100; 200 is part of a wireless power transmitter device 20. The wireless power receiver device 10 is placed in conjunction with the surface 27 of the housing 26. The housing 26 may have any suitable shape. In one embodiment the housing 26 is arranged in a way that allows testing of the wireless power receiver device 10. The housing 26 may be similar in shape to a charger.

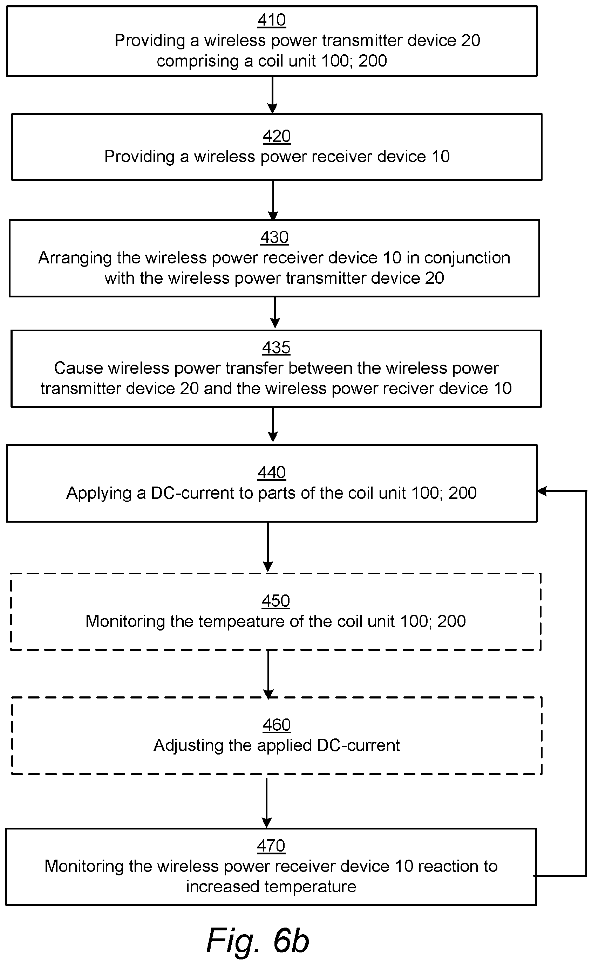

In operation, the wireless power transmitter device 20 will transfer power wirelessly to the wireless power receiver device 10 by way of magnetic induction 18 via the coil unit 100; 200 and wireless power receiver coil 14 in the wireless power receiver device 10. A method using this setup is illustrated in Fig. 6b.

The processing means 28 is configured for processing the data received from the device under test. The processing means 28 is connected to or comprises a computer readable storage medium such as a disk or memory. The memory may be configured to store data relating to the test session.

The processing means 28 may comprise or be in operative communication with an interface for receiving the data obtained by the device under test. The interface may be of any suitable type, including simple wiring, a serial interface such as USB, a wireless interface such as Bluetooth of WiFi, etc. The communication may also be achieved using a wired connection.

The processing means 28 may comprise or be in operative communication with means for communicating or presenting the data processing results obtained by the processing means 28. This may involve presentation of graphical information on a local user interface (e.g. display) of the device 20, generating of visual and/or audible alarms, or communication of information to an external device. Such an external device may for example be a computer or a mobile phone.

Fig. 4b shows a system comprising a wireless power receiver device 10 configured to test a wireless power transmitter device 20 being the device under test. The wireless power receiver device 10 comprises a coil unit 100; 200; 300 and a processing means 18. The processing means 18 may be the same as has been described with reference to Fig. 4a for the processing means 28.

The wireless power receiver device 10 preferably also comprises a housing 16 enclosing the coil unit 100; 200; 300 and the processing means 18. Hence, in this embodiment the coil unit 100; 200; 300 is part of a wireless power receiver device 10. The wireless power transmitter device 20 is placed in conjunction with the surface 17 of the housing 16.

The housing 16 may have any suitable shape. In one embodiment the housing 16is arranged in a way that allows testing of the wireless power transmitter device 20. The housing 16 may be similar in shape to a smartphone, for example having essentially the shape of a thin box with rounded edges and corners.

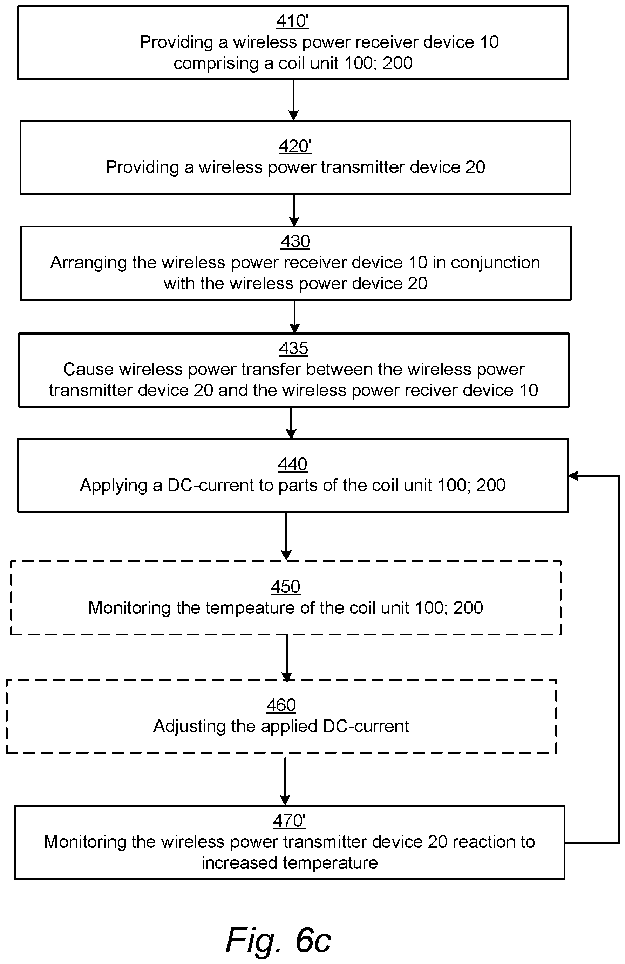

In operation, the wireless power transmitter device 20 will transfer power wirelessly to the wireless power receiver device 10 by way of magnetic induction 18 via the coil unit 100; 200 and wireless power transmitter coil 24 in the wireless power transmitter device 20. A method using this setup is illustrated in Fig. 6c.

Fig. 5a, shows a setup where the coil 100; 200 is used to control the operating environment, in form of the temperature, of the coil itself. Since changes in temperature lead to changes in behavior (e.g. losses of the system), the control of the temperature of the coil can help to control the behavior. In Fig. 5a, a system is shown where the coil unit 100; 200 is in operative communication with a processing means 90. The processing means 90 is configured to detect variations in the system caused by a change of temperature. The processing means 90 may be the same as has been described with reference to Figs. 4a-b for the processing means 18, 28.

The coil unit 100; 200 are further in operative communication with means for monitoring the temperature 92. The means for monitoring the temperature 92 may comprise the DC-source, means for controlling the DC-source and/or resistance measurements. The means for monitoring the temperature 92 may be a part of a processing means 90 or may be a separate unit.

The coil 100; 200 may further be in communication with a generator 91. The generator 91 is configured to cause a temperature change. Although not illustrated in Fig 5a, the generator 91 could be a part of the processing means 90.

Optionally, the coil unit 100; 200 may further be in operative communication with at least one temperature sensor 94. The at least one temperature sensor 94 may be any suitable prior art sensor capable of accurate temperature measurements. The temperature sensor 94 could for example be a thermocouple, thermistor, NTC, PTC, etc.. If a temperature sensor is present, the temperature data is preferably transmitted to the means for monitoring the temperature 92 and/or to the processing means 90. If temperature sensors are used, they are preferably arranged to verify the temperature estimations made by the coil unit 100; 200.

In Fig. 5b, a setup is shown where the temperature of the coil 100; 200 is measured using resistance measurements. The coil unit 100; 200 is arranged in conjunction with a wireless power product 10; 20 as described with reference to Figs. 4a-b.

The coil unit 100; 200 is further in operative communication with means for resistance measurements 96. The means for resistance measurements 96 preferably comprises means for measuring the voltage and the current applied to the at least one strand used for heating. By measuring the voltage and current applied to the at least one coil-heating strand, and the knowledge on room-temperature resistance, the actual temperature of the coil can be estimated based on the change in resistance.

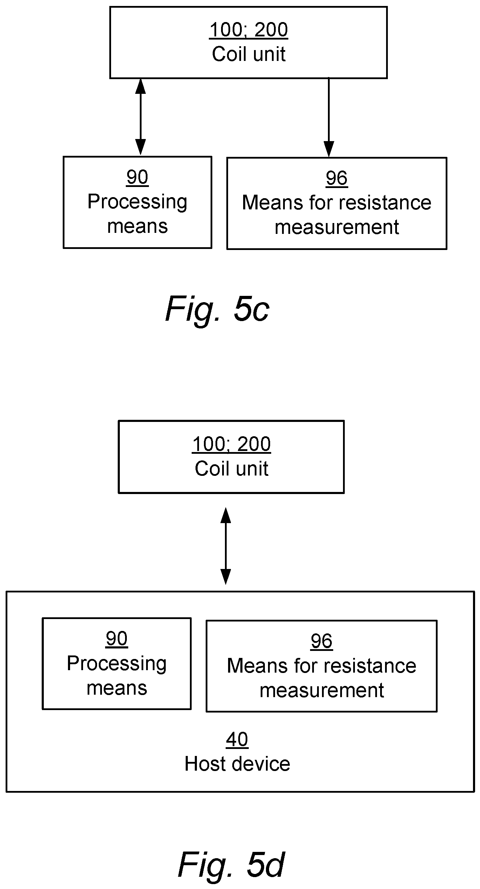

Fig. 5c shows a similar setup as in Fig. 5b, with the difference that the wireless power product 10; 20 is replaced with a processing unit 90. The processing unit 90 may for example be an emulation system or a testing system.

Fig. 5d shows a similar setup as in Fig. 5c, with the difference that the processing means 90 and the means for resistance measurement 96 are arranged in a host device 40. The host device 40 may also comprise or be connected to a generator that is configured to cause a temperature change.

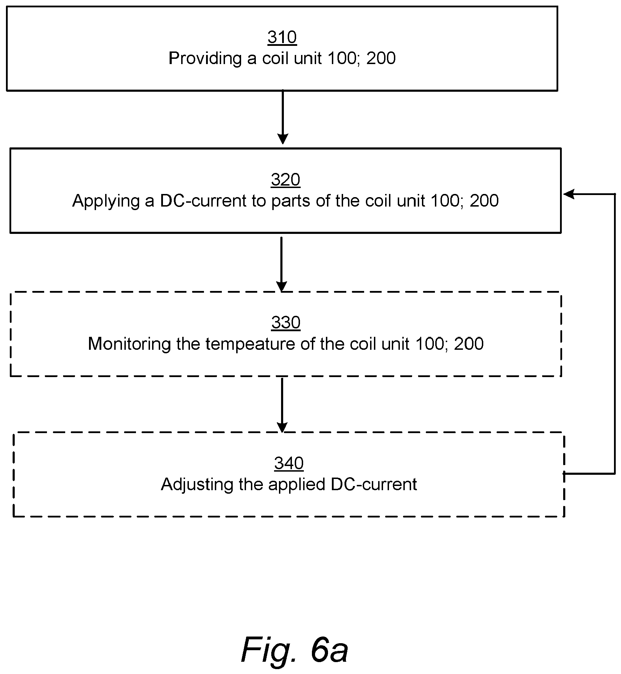

Fig. 6a illustrates an exemplified method of evaluating and/or adjusting the temperature of a coil unit 100; 200. In a first step, a coil unit 100; 200 having a wireless power coil 105; 205 is provided 310. The wireless power coil 105; 205 comprises at least two strands 112, 114; 212, 214. At least one strand 114; 214 is used for heating and at least one strand 112; 214 is used for wireless power transfer.

In a next step, a DC-current is applied 320 to parts of the coil unit 100; 200. More specifically, a DC-current is applied to the at least one strand 114; 214 used for heating, thereby increasing the temperature of the coil unit 100; 200.

In one optional step, the temperature of the wireless power coil 105; 205 of the coil unit 100; 200 is monitored or evaluated 330. In one embodiment, it is the temperature change that is monitored. In an alternative embodiment, it is the temperature value that is monitored. In yet one embodiment, both the value and the change are monitored.

The step of monitoring the temperature may be achieved by monitoring a change in resistance of the wireless power coil 105; 205. The change in resistance is indicative of a temperature change. The change in resistance of the wireless power coil 105; 205 may be monitored by measuring voltage and current in the system. More specifically, the voltage and current applied to the at least one strand 114; 214 used for heating is measured.

In yet an optional step, the applied DC-current is adjusted 340 to adjust the temperature of the coil unit 100; 200. This may be performed by a processing unit or similar device. The adjustment of the DC-current is preferably based on the step of monitoring the temperature.

The steps 330 and 340 could be performed in different orders, and the steps 320-340 are preferably repeated until satisfying temperature has been reached.

The method described in Fig. 6a may be performed during wireless power transfer to/from the power coil 105; 205.

Fig. 6b illustrates an exemplified method for testing how a wireless power device 10, 20 reacts to a temperature increase. In a first step, wireless power device 10, 20 is provided 410. In the exemplary method shown in Fig. 6b, the wireless power device is a wireless power transmitter device 20. The wireless power transmitter device 20 comprises a coil unit 100; 200 having a wireless power coil 105; 205. The wireless power coil 105; 205 comprises at least two strands 112, 114; 212, 214. At least one strand 114; 214 is used for heating and at least one strand 112; 214 is used for wireless power transfer. The wireless power transmitter device 20 further comprises a processing means 28.

In a next step, a wireless power receiver device 10 is provided 420. The wireless power receiver device 10 is, in this exemplary method, the device under test. The wireless power receiver device 10 is preferably arranged 430 in conjunction with the wireless power transmitter device 20. In a next step, wireless power transfer is initiated between the wireless power transmitter device 20 and the wireless power receiver device 10. Wireless power transfer may be initiated by applying an AC-current, as previously been described.

A DC-current is applied 440 to parts of the coil unit 100; 200. More specifically, a DC-current is applied to the at least one strand 114; 214 used for heating, thereby increasing the temperature of the coil unit 100; 200 in the wireless power transmitter device 20.

In one optional step, the temperature of the coil unit 100; 200 is monitored 450. The step of monitoring the temperature may be achieved by a temperature sensor. Alternatively, the step of monitoring the temperature is achieved by monitoring a change in resistance of the wireless power coil 105; 205. The change in resistance is indicative of a temperature change. The change in resistance of the wireless power coil 105; 205 may be monitored by measuring voltage and current in the system. More specifically, the voltage and current applied to the at least one strand 114; 214 used for heating is measured.

In an optional step, the applied DC-current is adjusted 460 to adjust the temperature of the coil unit 100; 200. This may be performed by a processing unit or similar device being part of or being operatively connected to the coil unit 100; 200.

An additional step 470 includes monitoring the device under test, in this case being the wireless power receiver device 10, on how it reacts to the change in temperature.

The steps 450-470 could be performed in different orders, and the steps 440-470 are preferably repeated until satisfying testing has been performed. Moreover, additional steps where features of the wireless power transfer are monitored are possible.

Fig. 6c illustrates an exemplified method for testing how a wireless power device 10, 20 reacts to a temperature increase. In this method, the device under test is the wireless power transmitter device 20 and the coil unit 100; 200 is arranged in the wireless power receiver device 10. Hence, the steps 410', 420' and 470' are modified accordingly.

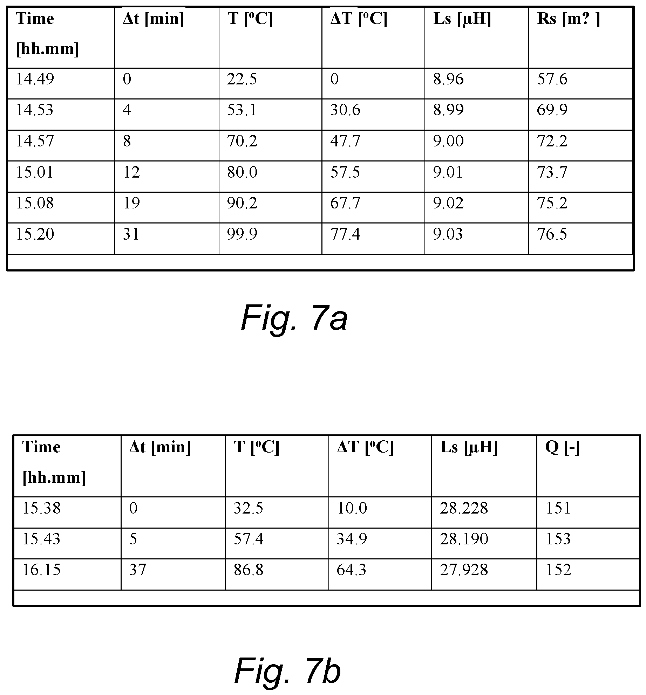

The inventors of the present invention have verified that the coil unit 100; 200 described herein is able to control the temperature by adjusting the DC-current flowing through the heating stands 114; 214. Results of two experimental setups are shown in Figs. 7a-b.

Fig. 7a shows the measurement results where a coil temperature was increased by running an DC-current in at least one strand used for heating. The starting temperature of the coil was at 22.5 °C, and the end temperature was around 100 °C, hence the change in temperature was around 75 °C. This heating was achieved by running DC-current of 2A through the heating strands 114; 214. The experiment lasted for 31 minutes. During the experiment the following measurements where made: temperature T (measured in °C), inductance of the circuit L (measured in $\mu$H), resistance R (measured in m$\Omega$). The resistance measured is the equivalent series resistance (ESR) of the coil.

The table in Fig. 7a shows how the coil inductance and the equivalent series resistance reacts to the coil heating. The equivalent series resistance of the coil increases with increasing temperature. This is an expected effect since the resistance of copper is temperature dependent and has a positive temperature coefficient of about 0.4% per degree increase. With an increase of 77.4 degrees the resistance would be expected to increase by about 31% which would be 17.8mQ. This is to be compared to the actual increase of 76.5 - 57.6 = 18.9$m\Omega$. This is considered within the margin of error given the test setup.

As can be seen in the table in Fig. 7a, there is also a small change in inductance: 9.03 - 8,96 = 70$nH$. In order to see if the static magnetic field (as generated by the coil-heating wires) has any impact on this number the DC source was turned OFF and later the polarity of the DC current was reversed. In both cases the inductance measurement did not vary. After letting the coil cool down the inductance value remained on the higher side and does not seem to drop with the temperature. This is thought to be an artefact of the inductance measurement equipment and the observed variation is small enough to be ignored:

$$\frac{70\,\mathrm{nH}}{8.96\,\mu H} = 0.8\%.$$

The table in Fig. 7b shows the results of another test setup that was used to verify if the static magnetic field of the coil-heating wires would disturb measurements of the reflected Q-factor of a transmitter coil. This is an important test to verify if a wireless power device could detect the presence of the coil-heating wires or the presence of the DC static field. During this experiment, the polarity of the DC current was reversed to see if any change in the reflected Q-factor or inductance could be observed. As is clear from the table in Fig. 7b, the Q-factor shows no change correlating to the temperature of the coil nor to the polarity of the magnetic field.

Hence, the embodiments of the invention described herein have been confirmed to cause a controlled heating of the coil without interfering with the wireless power transfer.

The invention can also be used to replace a temperature sensor in any receiver or transmitter device where knowledge on the temperature of the coil unit 100; 200 can be beneficial for the performance of that device.

The invention has been described above in detail with reference to embodiments thereof. However, as is readily understood by those skilled in the art, other embodiments are equally possible within the scope of the present invention, as defined by the appended claims.

**Claims**

1. A coil unit (100; 200; 300) for controlling and/or evaluating the temperature of a wireless power coil (105; 205; 305) in said coil unit (100; 200; 300), wherein the coil unit (100; 200; 300) comprises:

a wireless power coil (105; 205; 305) comprising at least two strands (112, 114; 212, 214; 312, 314), wherein at least one strand (114; 214; 314) is used for heating and at least one strand (112; 214; 314) is used for wireless power transfer, and wherein the least one strand (114; 214; 314) used for heating is configured to receive a DC-current.

2. The coil unit (100; 200; 300) according to claim 1, wherein the coil unit (100; 200; 300) is in operative communication with a processing means (18, 28, 90) configured to provide a DC-current to the at least one strand (114; 214; 314) used for heating.

3. The coil unit (100; 200; 300) according to claim 2, wherein the processing means (18, 28, 90) is further configured to provide an AC-current to the at least one strand (112; 212; 312) used for wireless power transfer.

4. The coil unit (100; 300) according to any preceding claims, wherein the at least two strands (112, 114; 312) are part of a litz wire.

5. The coil unit (200) according to any one of claims 1-3, wherein the at least two strands (212, 214) are arranged in a bifilar winding structure.

6. The coil unit (100; 200; 300) according to any preceding claims, wherein the coil unit (100; 200; 300) is arranged in a wireless power device (10, 20).

7. The coil unit (100; 200; 300) according to claim 6, wherein the wireless power device is a wireless power transmitter device (20) or a wireless power receiver device (10).

8. The coil unit (100; 200; 300) according to any preceding claims, wherein the coil unit (100; 200; 300) is in operative communication with means for monitoring the temperature of the coil unit (100; 200; 300).

9. The coil unit (100; 200; 300) according to claim 8, wherein the means for monitoring the temperature comprises means for resistance measurements (96).

10. A wireless power device (10; 20) comprising the coil unit (100; 200; 300) according to any one of claims 1-9.

11. The wireless power device (10; 20) according to claim 10, wherein the wireless power device (10; 20) is configured to test how a further wireless power device (10; 20), having at least one wireless power coil (24; 14), reacts to a temperature change in the wireless power coil (105; 205; 305) of the coil unit (100; 200; 300).

12. A method of controlling and/or evaluating the temperature of a wireless power coil (105; 205; 305) in coil unit (100; 200; 300), the method comprising:

providing a coil unit (100; 200; 300) comprising a wireless power coil (105; 205; 305) comprising at least two strands (112, 114; 212, 214; 312, 314), wherein at least one strand (114; 214; 314) is used for heating and at least one strand (112; 212; 312) is used for wireless power transfer, and
applying a DC-current to the least one strand (114; 214; 314) used for heating.

13. The method according to claim 12, further comprising:
monitoring a temperature change of the wireless power coil (105; 205; 305).

14. The method according to claim 13, further comprising:

adjusting the applied DC-current based on the monitored temperature change.

15. A method of testing a wireless power device (10; 20), the method comprising:

providing a coil unit (100; 200; 300) comprising a wireless power coil (105; 205; 305) comprising at least two strands (112, 114; 212, 214; 312, 314), wherein at least one strand (114; 214; 314) is used for heating and at least one strand (112; 212; 312) is used for wireless power transfer, and
applying a DC-current to the least one strand (114; 214; 314) used for heating.

16. The method according to claim 15, further comprising:
monitoring how the wireless power device (10, 20) being tested reacts to the temperature change caused by the DC-current.

**10** Wireless power receiver device

**16** Load (battery)

**12** Power Rx **14**

**18**

**24** Power Tx **22**

**20** Wireless power transmitter device

**10a**

**10c**

**10b**

**10d** 12:00

# Fig. 1

*Fig. 2a*

*Fig. 2b*

*Fig. 3a*

*Fig. 3b*

**10**
Wireless power receiver device

18 ⌇——|||||||| 27

**20**

**100; 200**
Coil unit

**28**
Processing means

**26**
Housing

## Fig. 4a

**16**
Housing

**100; 200**
Coil unit

**18**
Processing means

**10**

17

18 ⌇——|||||||

**20**
Wireless power transmitter device

## Fig. 4b

100; 200
Coil unit

94
Temperature
sensor

91
Generator

92
Means for monitoring
the temperature

90
Processing means

*Fig. 5a*

100; 200
Coil unit

10; 20
Wireless power
product

96
Means for resistance
measurement

*Fig. 5b*

```
┌─────────────────────────────┐
│         100; 200            │
│         Coil unit           │
└─────────────────────────────┘
     ▲                  │
     │                  │
     ▼                  ▼
┌──────────────┐  ┌──────────────────┐
│     90       │  │       96         │
│  Processing  │  │ Means for        │
│   means      │  │ resistance       │
│              │  │ measurement      │
└──────────────┘  └──────────────────┘
```

## Fig. 5c

```
┌─────────────────────────────┐
│         100; 200            │
│         Coil unit           │
└─────────────────────────────┘
              ▲
              │
              ▼
┌───────────────────────────────────────────┐
│  ┌──────────────┐  ┌────────────────────┐  │
│  │     90       │  │        96          │  │
│  │  Processing  │  │  Means for         │  │
│  │   means      │  │  resistance        │  │
│  │              │  │  measurement       │  │
│  └──────────────┘  └────────────────────┘  │
│               40                           │
│            Host device                     │
└───────────────────────────────────────────┘
```

## Fig. 5d

```
┌─────────────────────────────────────────────────────────────────┐
│                              310                                  │
│                    Providing a coil unit 100; 200                 │
└─────────────────────────────────────────────────────────────────┘
                                 │
                                 ▼
┌─────────────────────────────────────────────────────────────────┐
│                              320                                  │
│        Applying a DC-current to parts of the coil unit 100; 200   │◄──┐
└─────────────────────────────────────────────────────────────────┘   │
                                 │                                     │
                                 ▼                                     │
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─┐   │
│                              330                                  │   │
│          Monitoring the tempeature of the coil unit 100; 200      │   │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─┘   │
                                 │                                     │
                                 ▼                                     │
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─┐   │
│                              340                                  │   │
│               Adjusting the applied DC-current                    │───┘
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─┘
```

*Fig. 6a*

**410**
Providing a wireless power transmitter device 20
comprising a coil unit 100; 200

**420**
Providing a wireless power receiver device 10

**430**
Arranging the wireless power receiver device 10 in conjunction
with the wireless power transmitter device 20

**435**
Cause wireless power transfer between the wireless power
transmitter device 20 and the wireless power reciver device 10

**440**
Applying a DC-current to parts of the coil unit 100; 200

**450**
Monitoring the tempeature of the coil unit 100; 200

**460**
Adjusting the applied DC-current

**470**
Monitoring the wireless power receiver device 10 reaction to
increased temperature

*Fig. 6b*

410'
Providing a wireless power receiver device 10
comprising a coil unit 100; 200

420'
Providing a wireless power transmitter device 20

430
Arranging the wireless power receiver device 10 in conjunction
with the wireless power device 20

435
Cause wireless power transfer between the wireless power
transmitter device 20 and the wireless power reciver device 10

440
Applying a DC-current to parts of the coil unit 100; 200

450
Monitoring the tempeature of the coil unit 100; 200

460
Adjusting the applied DC-current

470'
Monitoring the wireless power transmitter device 20 reaction to
increased temperature

*Fig. 6c*

| Time [hh.mm] | Δt [min] | T [ºC] | ΔT [ºC] | Ls [µH] | Rs [m? ] |
|---|---|---|---|---|---|
| 14.49 | 0 | 22.5 | 0 | 8.96 | 57.6 |
| 14.53 | 4 | 53.1 | 30.6 | 8.99 | 69.9 |
| 14.57 | 8 | 70.2 | 47.7 | 9.00 | 72.2 |
| 15.01 | 12 | 80.0 | 57.5 | 9.01 | 73.7 |
| 15.08 | 19 | 90.2 | 67.7 | 9.02 | 75.2 |
| 15.20 | 31 | 99.9 | 77.4 | 9.03 | 76.5 |

## Fig. 7a

| Time [hh.mm] | Δt [min] | T [ºC] | ΔT [ºC] | Ls [µH] | Q [-] |
|---|---|---|---|---|---|
| 15.38 | 0 | 32.5 | 10.0 | 28.228 | 151 |
| 15.43 | 5 | 57.4 | 34.9 | 28.190 | 153 |
| 16.15 | 37 | 86.8 | 64.3 | 27.928 | 152 |

## Fig. 7b

Europäisches
Patentamt

European
Patent Office

Office européen
des brevets

# EUROPEAN SEARCH REPORT

Application Number

EP 21 16 0779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 785 475 A (ZHONGXING NEW ENERGY VEHICLE CO LTD) 16 October 2020 (2020-10-16) | 1,4-7, 10,11 | INV. H02J50/12 H02J50/60 G01K7/22 |
| Y | * the whole document * | 8,9 | |
| A | | 2,3, 12-16 | |
| Y | SE 538 130 C2 (NOK9 AB [SE]) 15 March 2016 (2016-03-15) * the whole document * | 8,9 | |
| A | US 2021/046836 A1 (LAEMMLE CHRISTOPHER [DE] ET AL) 18 February 2021 (2021-02-18) * the whole document * | 1-16 | |
| A | CN 107 806 943 A (VIVO COMM TECHNOLOGY CO LTD) 16 March 2018 (2018-03-16) * the whole document * | 1-16 | |
| A | EP 3 657 144 A1 (BEIJING XIAOMI MOBILE SOFTWARE CO LTD [CN]) 27 May 2020 (2020-05-27) * the whole document * | 1-16 | TECHNICAL FIELDS SEARCHED (IPC) H02J H04B H01F G01K |

The present search report has been drawn up for all claims

| Place of search | Date of completion of the search | Examiner |
|---|---|---|
| Munich | 28 July 2021 | Annibal, Stewart |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 16 0779

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2021

| Patent document cited in search report | | Publication date | Patent family member(s) | | Publication date |
|---|---|---|---|---|---|
| CN 111785475 | A | 16-10-2020 | NONE | | |
| SE 538130 | C2 | 15-03-2016 | NONE | | |
| US 2021046836 | A1 | 18-02-2021 | CN | 111565963 A | 21-08-2020 |
| | | | DE | 102018201704 A1 | 08-08-2019 |
| | | | US | 2021046836 A1 | 18-02-2021 |
| | | | WO | 2019149849 A1 | 08-08-2019 |
| CN 107806943 | A | 16-03-2018 | NONE | | |
| EP 3657144 | A1 | 27-05-2020 | CN | 111200304 A | 26-05-2020 |
| | | | EP | 3657144 A1 | 27-05-2020 |
| | | | US | 2020161892 A1 | 21-05-2020 |

EPO FORM P0459

For more details about this annex : see Official Journal of the European Patent Office, No. 12/82